# EUROPEAN PATENT APPLICATION

(11) **EP 4 636 998 A1**
(43) Date of publication of application: **22.10.2025**
(21) Application number: 25165791.2
(22) Date of filing: 24.03.2025
(51) Int. Cl.: H02K 5/22, H02K 5/10, H02K 11/27

(54) **COMPACT GENERATOR TERMINAL**

(30) Priority: 17.04.2024 US 202418638219
(71) Applicant: Honeywell International Inc., Charlotte, NC 28202 (US)
(72) Inventor: DAVILA, Cesar Abraham, Charlotte 28202 (US); GUTHRIE, Brian, Charlotte 28202 (US)
(74) Representative: Ingrassia, Fisher & Lorenz UK Ltd.

(57) **Abstract**

A terminal for a power generator includes an electrical conductor comprising a cavity and end member. The end member is configured to be disposed inside the power generator and receive electrical power from the power generator. A stud is disposed into the cavity of the electrical conductor. Accordingly, the terminal can be directly coupled into the power generator without straps or other intermediate equipment to provide electrical power to the terminal.

## Description

### BACKGROUND

Aerial vehicles such as commercial aircraft utilize power systems to provide power for aircraft system functionality. Such power systems typically comprise one but potentially more alternating current (AC) generators that generate power. Generators are complex systems. Among other components, these generators include a motor enclosed by a thick exterior housing that protects the motor. Not only are they heavy and bulky, but they tend to occupy a sizable amount of space on the aircraft.

To transfer power from the generator, one or more terminals are used to electrically couple the generator to an external powered device, such as a bus bar. This coupling scheme is done using a separated terminal (or terminal bus) that indirectly connects to the generator via one or more connecting leads. However, while functional, coupling the terminals in this manner results in a power system with high space, weight, and size requirements. As a result, these systems may be too cost prohibitive to implement on smaller aircraft, and may adversely impact navigation efficiency for larger aircraft.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of the various patents, applications and publications as identified herein to provide yet further embodiments.

In one embodiment a device is disclosed. The device comprises a nut comprising a coaxial hole. The device comprises a stud inserted into the coaxial hole of the nut. The device further comprises an electrical conductor coupled to the nut, wherein the electrical conductor comprises a cavity and an end member. The stud is at least partially disposed in the cavity. The end member is configured to be disposed inside, and to receive electrical power from, a power generator. The electrical conductor is configured to provide the electrical power to a bus bar coupled to the electrical conductor.

In another embodiment, a device is disclosed. The device comprises a stud and an electrical conductor comprising a cavity and an end member. The stud is disposed in the cavity of the electrical conductor. The end member is configured to be disposed inside, and to receive electrical power from, a power generator. The electrical conductor is configured to provide the electrical power to a bus bar coupled to the electrical conductor.

In yet another embodiment, a system is disclosed. The system comprises a power generator, and at least one terminal coupled to the power generator. Each at least one terminal comprises a stud and an electrical conductor comprising a cavity and an end member. The stud is disposed in the cavity of the electrical conductor. The end member is configured to be disposed inside, and to receive electrical power from, the power generator. The electrical conductor is configured to provide the electrical power to a bus bar coupled to the electrical conductor.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, which are briefly described as follows.
Figure 1 depicts a schematic illustration of an exemplary generator terminal, as described in one or more embodiments.
Figure 2 depicts a schematic illustration of an internal coupling scheme of an exemplary generator terminal in a generator, as described in one or more embodiments.
Figure 3 depicts a schematic illustration of an exemplary multi-terminal configuration, as described in one or more embodiments.
Figure 4 depicts an isometric view of an exemplary terminal coupling system configured to attach to the housing of a generator, as described in one or more embodiments.
Figure 5 depicts an exploded isometric view of the terminal coupling system shown in Figure 4.
Figure 6 depicts an isometric view of a terminal coupling system installed on a generator, as described in one or more embodiments.
Figure 7 depicts a cutaway view of one embodiment of a terminal coupling system installed on a generator.
Figure 8 depicts an isometric view of an exemplary terminal coupling system configured to attach to the housing of a generator, as described in one or more embodiments.
Figure 9 depicts an exploded isometric view of the terminal coupling system shown in Figure 8.
Figure 10 depicts a cutaway view of one embodiment of a terminal coupling system installed on a generator.
Figures 11A-B depict isometric views of terminal coupling systems, as described in one or more embodiments.
Figure 12 depicts a flow diagram of a method for installing a terminal to a generator.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, any methods presented in the drawing figures and the specification are not to be construed as limiting the order in which the individual steps may be performed. The following detailed description is, therefore, not to be taken in a limiting sense.

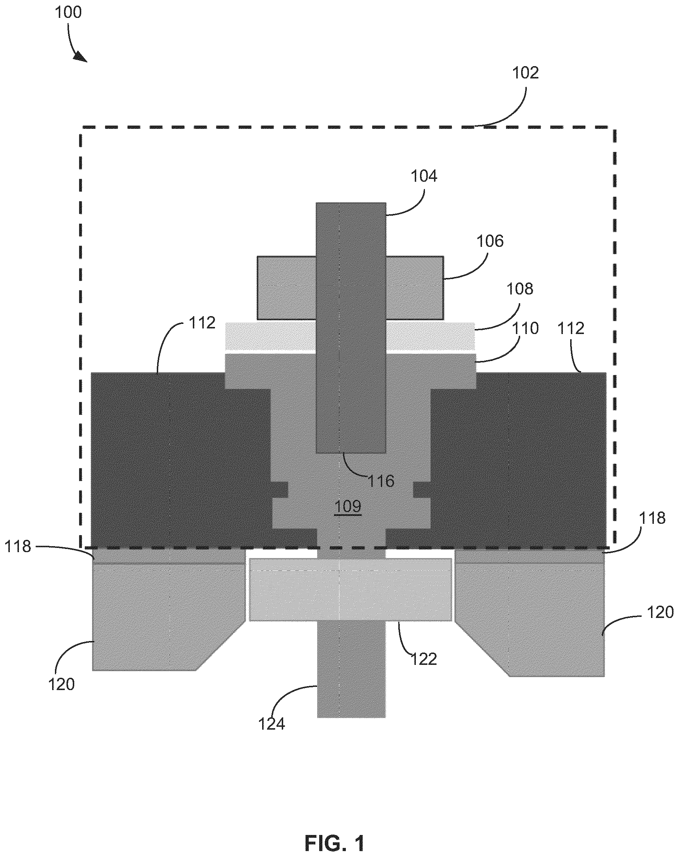

Figure 1 depicts a schematic illustration of an exemplary generator terminal 100. Specifically, Figure 1 illustrates a cutaway side view of the terminal 100. As described further, the generator terminal 100 can be directly coupled to the generator and receive power directly from power equipment in the generator, thereby reducing the space that a power generating system occupies on aircraft or other vehicles. Terminal 100 generally includes a stud 104 and nut 106 mechanically coupled together, with nut 106 also physically coupled to the top 110 of an electrical conductor 109. In this coupling scheme, the nut 106 includes a hole (not explicitly shown) in which the stud 104 is disposed therein. The dimensions of the hole of the nut 106 should preferably match the spatial dimensions of the stud 104 to ensure a snug fit into the hole and securely attach the terminal 100 to the generator. For example, the nut 106 and stud 104 can include helical grooves to lock the stud 104 to the hole of the nut 106, though stud 104 can be coupled to nut 106 in other ways. Both stud 104 and nut 106 can be made of metals or other durable materials.

The stud 104 also remains in physical contact with electrical conductor 109. Stud 104 couples to electrical conductor 109 by disposing the stud 104 into a cavity 116 of the electrical conductor 109 (while stud 104 also engages with nut 106). The spatial dimensions of the cavity 116 should preferably match the spatial dimensions of the stud 104 to securely couple the stud 104 and electrical conductor 109 together. In some embodiments, the outer surface of the electrical conductor 109 (including the cavity) and/or stud 104 are coated with a braze to create a conductive assay that enables the electrical load delivered by the electrical conductor 109 to be shared. Electrical conductor 109 is defined by a cavity 116 carved in the center of the top portion 110, and an elongated end member 124 that penetrates into, and receives power from, the generator. Both the top portion 110 and the end member 124 of electrical conductor 109 are electrically conductive so that electrical power can flow from the generator to the end member 124 up to the top portion 110. The top portion 110 and the end member 124 are not separated by any intervening mechanical or electrical components but rather form the electrical conductor 109 in one piece.

When connected to power equipment in the generator, electrical conductor 109 provides power to a bus bar 108 that is mechanically and electrically coupled to electrical conductor 109. As shown in Figure 1, bus bar 108 is coupled to the top portion 110 of electrical conductor 109 and coupled between electrical conductor 109 and nut 106. Bus bar 108 can also engage with stud 104, for example, by coupling bus bar 108 around the coaxial circumference of the stud 104. Bus bar 108 can provide the electrical power received from electrical conductor 109 to one or more powered devices or systems on the vehicle. Such systems can include (but not limited to) sensors, operating systems, and the like, which can be directly or indirectly coupled to the bus bar 108 by a signal bus.

Electrical conductor 109 is coupled in place via a terminal block 112. Terminal block 112 comprises a plastic or other durable material that can securely couple to the electrical conductor 109. For example, terminal block 112 can be molded to the electrical conductor 109 once the electrical conductor has been fastened to the generator. In some embodiments, terminal block 112 comprises an electrically insulating material that does not carry electric current in order to restrict the flow of electricity to electrical conductor 109. As shown in Figure 1, the top portion 110 of the electrical conductor 109 can be exposed to its proximate environment so that the terminal block 112 does not completely enclose the electrical conductor 109. In some embodiments, terminal block 112 is attached firmly to the exterior of the generator and seals the opening that the terminal 100 is disposed in.

In some embodiments, terminal 100 is enclosed by a terminal housing 102. The terminal housing 102 is distinct from the generator housing 120 that couples to the terminal block 112. Instead, terminal housing 102 is manufactured independent of the generator housing 120 and can be manufactured of different materials than generator housing 120. Thus, the terminal block 112 and terminal housing 102 are not part of the generator housing 120 for purposes of this disclosure. Rather, the "housing" of the generator refers to the intrinsic housing that is produced as part of the generator during manufacture. If implemented, terminal housing 102 isolates the terminal(s) 100 inside the housing and can protect the terminal(s) 100 from the exterior environment. While terminal housing 102 is shown as enclosing terminal 100 in free space, in some embodiments the space can be filled with an insulating material.

Additionally, a sealant 118 can be used between the terminal block 112 and the generator housing 120 to further seal any gaps that arise from installing terminal 100 to the generator. For example, the sealant 118 can be a layer of epoxy material or a sealing sheet. Furthermore, while not explicitly shown in Figure 1, additional sealing devices can be used to seal the opening of the generator in which terminal 100 is disposed. For example, one or more sealing rings (e.g., o-rings) can be disposed below the terminal block 112. In doing so, the interior of the generator (inside generator housing 120) can be sealed and isolated once terminal 100 is installed on the generator. In fact, terminal 100 is configured to be permanently installed onto the generator housing 120.

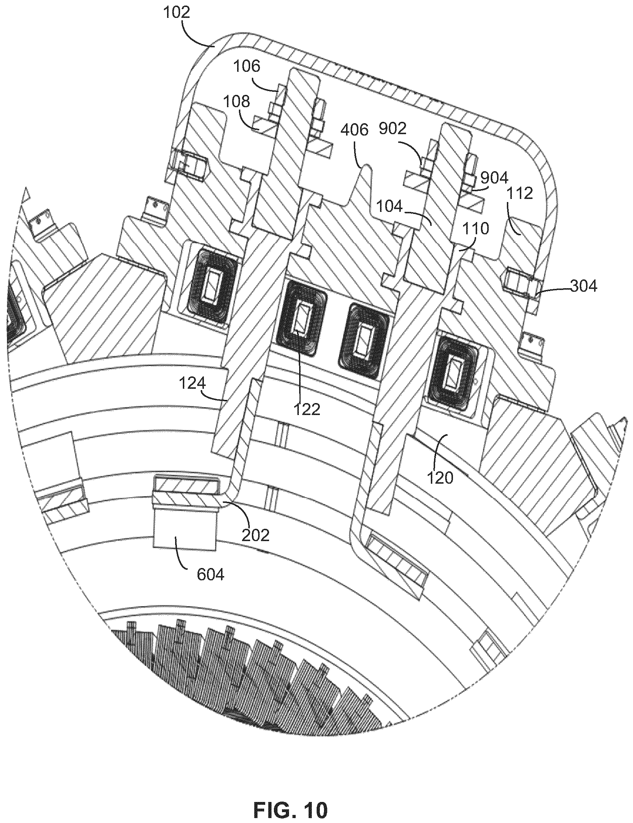

In some embodiments, a current transformer 122 is coupled to the electrical conductor 109, for example, to the end member 124 as shown in Figure 1. Current transformer 122 is configured to measure the current in the electrical conductor 109 received from the generator and can magnify or reduce the current flowing through the conductor. In this way, current transformer 122 can protect the electrical conductor 109, and the terminal 100 more generally, from electrical faults and excessive current that is provided to bus bar 108. Also, current transformer 122 is disposed inside the generator housing 120 and below terminal block 112, which reduces the space needed for the terminal 100 to be installed outside the generator. To stabilize the operation of current transformer 122, the inside of generator housing 120 can be sprayed with oil or other coolant, which can cool current transformer 122 during operation. As shown more explicitly in Figures 10-11, terminal block 112 can include a cavity that houses current transformer 122, along with additional mounting features to fix current transformer 122 to terminal block 112.

As previously noted, electrical conductor 109 receives electric power from the generator through end member 124. Current transformer 122 receives power from the end member 124 and if necessary adjusts the magnitude of current that is subsequently passed through to the top portion 110 of electrical conductor 109 and used to energize bus bar 108. The configuration and coupling of electrical conductor 109 enables the conductor to be directly exposed to the internal power equipment in the generator and to directly receive power from the generator. In this way, the terminal 100 can be directly coupled inside the generator, as opposed to separating the electrical conductor 109 into multiple components and/or separating different portions of the terminal 100 via straps or other connectors.

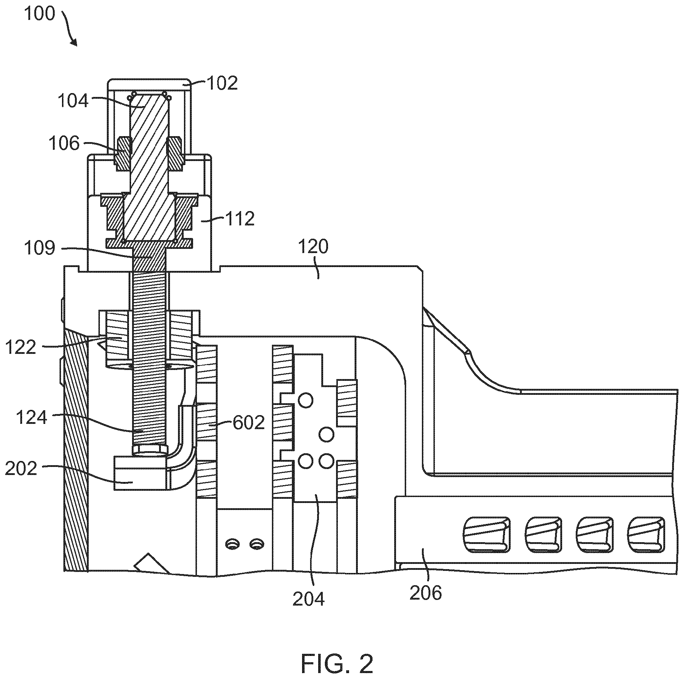

Figure 2 depicts a schematic illustration of an internal coupling scheme of an exemplary generator terminal 100 in a generator. In Figure 2, the coupling between the terminal 100 and the generator is shown more clearly. Here, end member 124 is physically and electrically coupled to a connecting lead 202 which electrically couples the electrical conductor 109 to a generator stator (not shown). The stator generates the alternating current voltage that is provided to the electrical conductor 109.

The generator is not described with particularity since its operation is familiar to one of ordinary skill in the art. In Figure 2, the generator includes a ring separator 204, which separates the various rings (one of which indicated at element 602) of the stator to prevent electrical discharge between the conductive rings. A cooling assembly 206 is coupled to the generator and cools the generator by applying an oil coolant which can also be used to cool the current transformer 122.

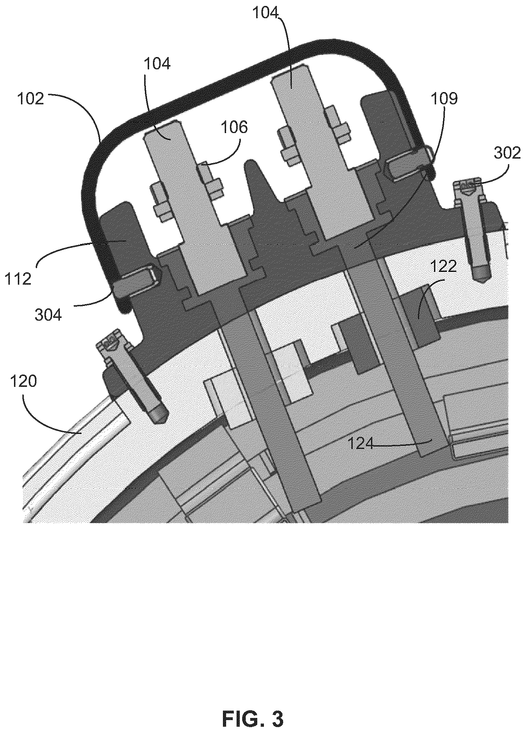

Figure 3 depicts a schematic illustration of an exemplary multi-terminal configuration. As shown in Figure 3, in some embodiments a plurality of terminals 100 are coupled to the generator similarly as shown and described with respect to Figure 1. Two terminals are coupled to the generator in Figure 3; however, any number of terminals can be coupled in the coupling scheme shown. Also, multiple terminals can be coupled radially as shown in the cutaway view of Figure 3, but can also be coupled in three-dimensions protruding into or out of the page to form a terminal array, with the number of terminals supported by the geometry of the generator and its operating parameters. Each terminal includes its own electric conductor 109 that is disposed into the generator housing 120. The terminal housing 102 encloses both terminals, and can be fastened to the terminal block 112 by inserting one or more bolts 304 into the terminal block 112, two of which are shown in Figure 3. To couple the terminal block 112 to the exterior of the generator housing 120, one or more screws 302 can be placed through the terminal block 112 into the generator housing 120. Once the terminals are installed into the generator, they are designed to be permanently coupled to the generator for continuous long-term operation.

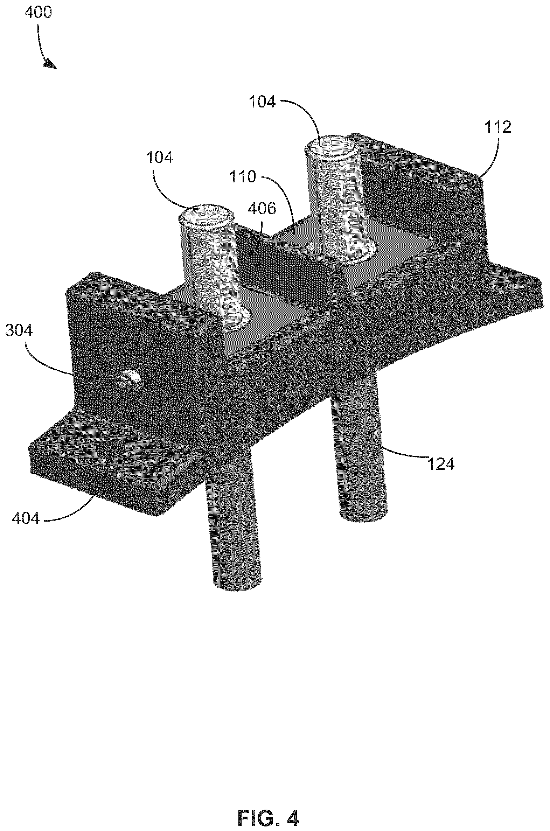

Figure 4 depicts an isometric view of an exemplary terminal coupling system 400 configured to attach to the housing of a generator. Similar to Figure 3, terminal coupling system 400 includes a plurality of terminals each having a stud 104 and an electrical conductor comprising a top portion 110 and an end member 124. Referring to Figures 1 and 4, the surface of the electrical conductor 109 is exposed around the stud 104 and layered over the terminal block 112. In Figure 4 (and also as shown in Figure 3), each terminal is separated by a partition 406 that is fashioned from terminal block 112. In this embodiment, a separate nut 106 is not needed to couple the stud 104 into the cavity 116 of the electrical conductor 109. One or more screws 302 can be disposed into the hole 404 similarly as shown in Figure 3 to couple the terminal block 112 to the exterior of the generator housing 120.

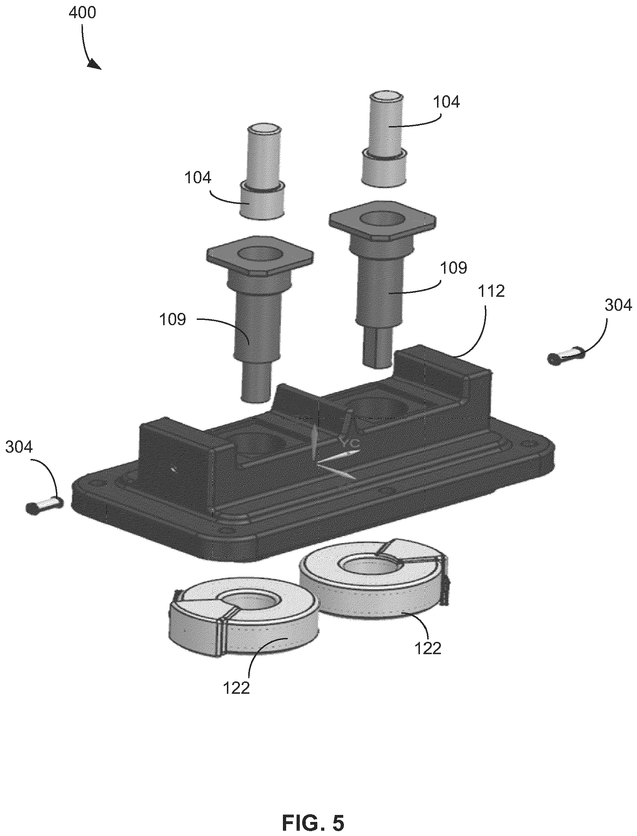

Figure 5 depicts an exploded isometric view of the terminal coupling system 400 shown in Figure 4. Referring to Figures 4-5, stud 104 is inserted into the cavity of the electrical conductor 109. The electrical conductor 109 in turn is disposed into the terminal block 112 so that the end member 124 is inside the generator and receives electrical power therefrom. A respective current transformer 122 is also disposed in the generator and coupled around the end member 124 of each electrical conductor 109.

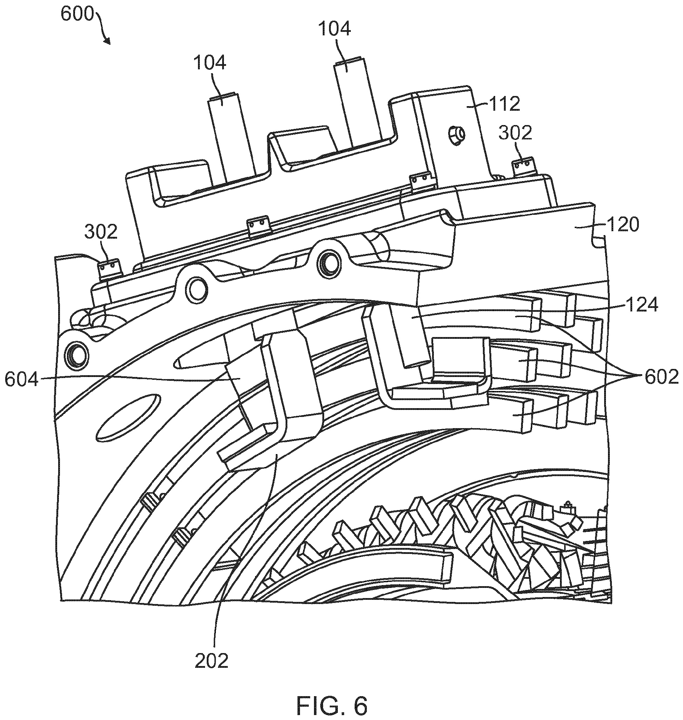

Figure 6 depicts an isometric view of a terminal coupling system 600 installed on a generator. As described with respect to Figure 3, the terminal coupling system 600 is attached to the exterior of the generator housing 120 by disposing multiple screws 302 into the terminal block 112 and the generator housing 120. When coupled to the generator, the end member 124 of electrical conductor 109 is disposed inside the generator and is electrically coupled to a bus ring bracket 604 and a connecting lead 202, which connects end member 124 to the appropriate bus ring 602 of the generator. Each bus ring 602 connects to a respective stator winding (not shown) of the generator, which provides electrical power to the bus ring 602 and ultimately to the electrical conductor 109.

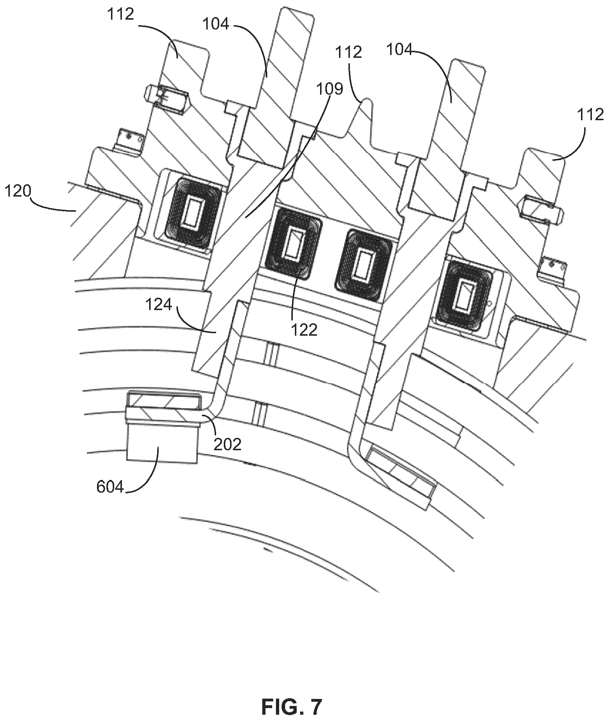

Figure 7 depicts a cutaway view of one embodiment of a terminal coupling system installed on a generator. In Figure 7, the terminal block 112 is fixed to the exterior of the generator housing 120. Two terminals each having an electrical conductor 109 are disposed in the terminal block 112 and into the generator with no terminal housing enclosing the terminals. Additionally, in the embodiment of Figure 7, two current transformers 122 are disposed inside the terminal block 112 and around each terminal.

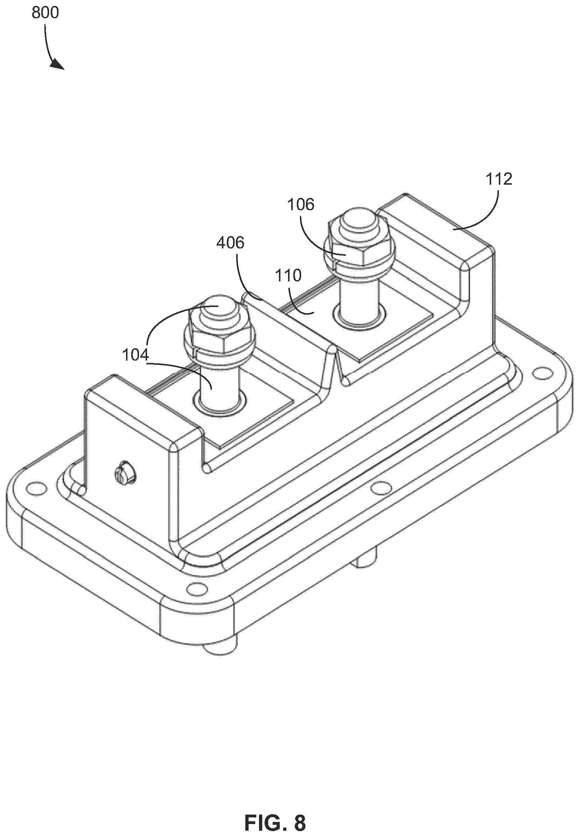

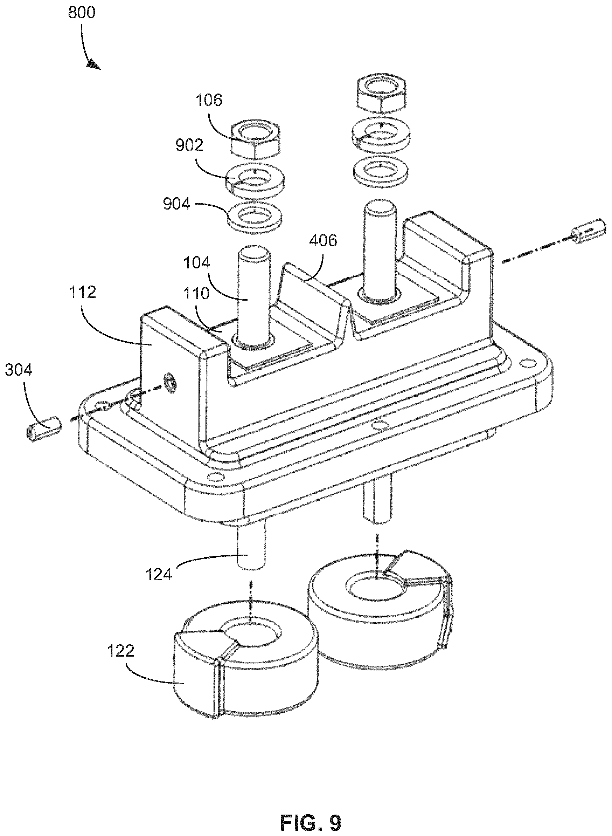

Figure 8 depicts an isometric view of an exemplary terminal coupling system 800 configured to attach to the housing of a generator. Figure 9 depicts an exploded isometric view of the terminal coupling system 800 shown in Figure 8. Terminal coupling system 800 operates similarly as previously described terminal coupling systems. Referring to Figures 8-9, a nut 106 is screwed around stud 104 similarly as shown and described with respect to Figure 1. Also, a respective lock washer 902 and washer 904 are coupled with nut 106 around stud 104 to assist in firmly coupling stud 104 into the cavity 116 of electrical conductor 109 and into terminal block 112.

Figure 10 depicts a cutaway view of one embodiment of a terminal coupling system installed on a generator. In Figure 10, two terminals comprising the lock washer 902 and washer 904 of Figures 8-9 are disposed in terminal block 112 and enclosed by terminal housing 102. Bus bar 108 is coupled to stud 104 and configured to receive electrical power from electrical conductor 109 (in which stud 104 comprises a conductive material that provides power from electrical conductor 109 to bus bar 108). Lock washer 902 and washer 904 are coupled above bus bar 108 to secure bus bar 108 to stud 104.

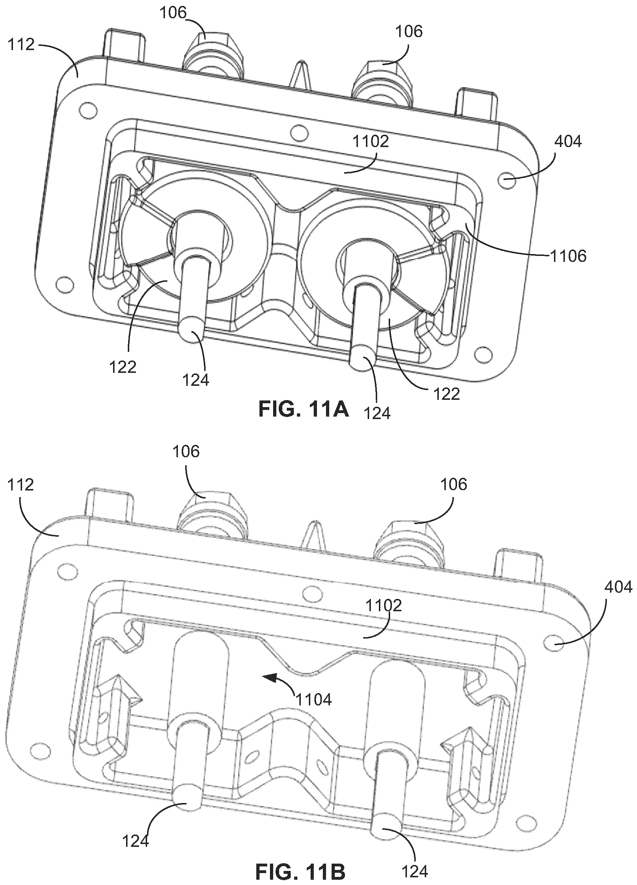

Figures 11A-B depict isometric views of terminal coupling systems, such as terminal coupling system 800 described with respect to Figures 8-9. Specifically, Figures 11A-11B depict the underside of the terminal coupling system, as would be seen inside the generator it is disposed in. The terminal block 112 is coupled to the exterior of the generator housing 120 by disposing a screw or other coupler into each hole 404. As shown in Figure 11A, the terminal coupling system includes a protrusion 1102 that extends inside the generator. In the protrusion 1102 is a cavity 1104 (more readily shown in Figure 11B) that houses and fixes current transformer and end member 124. For example, cavity 1104 includes four attaching members 1106 that couple to current transformer 122 and hold it into place. In Figure 11A, the protrusion 1102 includes current transformer 122 whereas in Figure 11B, no current transformer 122 is present.

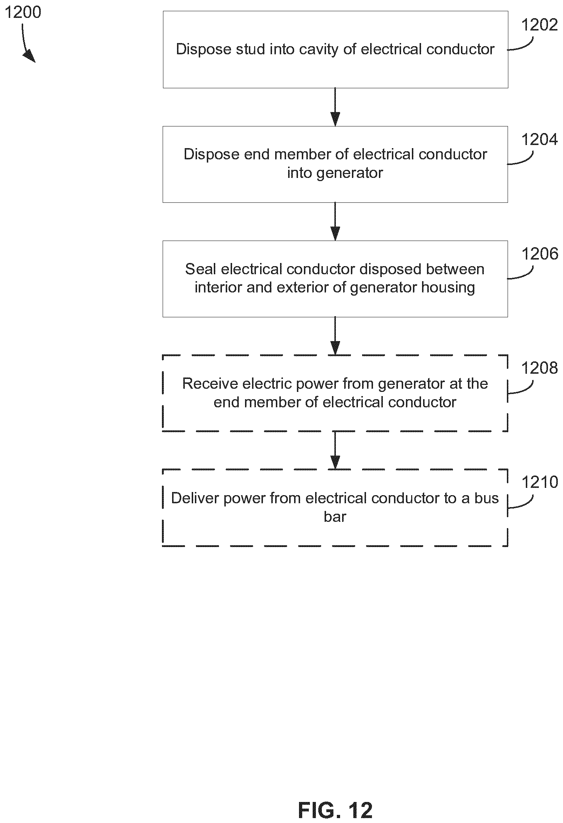

Figure 12 depicts a flow diagram of a method 1200 for installing a terminal to a generator. Method 1200 may be implemented via the techniques described with respect to Figures 1-11, but may be implemented via other techniques as well. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner).

Method 1200 includes disposing a stud into a cavity of an electrical conductor at block 1202, such as shown with respect to Figure 1. Additionally, the stud and/or electrical conductor can be coated with a braze to facilitate electrical conductivity when the terminal is installed. Once the stud is disposed in the cavity of the electrical conductor, it can be coupled to the conductor by conventional techniques. Method 1200 proceeds to block 1204 and disposes the end member of the electrical conductor into the generator that generates the AC voltage. While coupled into the generator, the end member is configured to receive electric power from a stator and, being part of the electrical conductor, the end member provides the electric power to the external portion of the electrical conductor. A current transformer can be used to monitor the power received by the end member and to adjust if necessary the amount of power that is received.

At block 1206, method 1200 seals the electrical conductor that is disposed between the interior and the exterior of the generator housing. By sealing the electrical conductor at block 1206, the end member remains inside the housing of the generator while the top portion of the electrical conductor remains external to the generator. In some embodiments, the electrical conductor is sealed by coupling the electrical conductor to a terminal block that is molded over the installation site on the generator. Additionally, the electrical conductor can be sealed with a sealant disposed between the terminal block and the generator housing. And in some embodiments the electrical conductor can be sealed with one or more sealing rings placed around the electrical conductor. In this way, the electrical conductor can be permanently coupled to the generator and receive electrical power directly from the generator.

Once the installation is complete, method 1200 optionally proceeds to block 1208 and receives electric power from the generator at the end member of the electrical conductor. For example, the electrical conductor is electrically coupled to a stator in the generator that supplies AC voltage to the end member. A current transformer can also be electrically coupled to the electrical conductor and change the amount of AC voltage that is received by the stator. Proceeding to block 1210, method 1200 optionally delivers power from the electrical conductor to a bus bar. From here, the electrical power can be distributed to other systems that are electrically coupled to the generator via the terminal. Blocks 1208 and 1210 are optionally part of method 1200 since these relate to subsequent operation of the terminal after proper installation to the generator, and are not necessary to achieve installation of the terminal.

### EXAMPLE EMBODIMENTS

Example 1 includes a device, comprising: a nut comprising a coaxial hole; a stud inserted into the coaxial hole of the nut; and an electrical conductor coupled to the nut, wherein the electrical conductor comprises a cavity and an end member, wherein the stud is at least partially disposed in the cavity, wherein the end member is configured to be disposed inside, and to receive electrical power from, a power generator, wherein the electrical conductor is configured to provide the electrical power to a bus bar coupled to the electrical conductor.

Example 2 includes the device of Example 1, comprising a terminal block coupled to an exterior of the power generator, wherein the terminal block permanently couples the electrical conductor to the power generator and electrically insulates a housing of the power generator from the electrical conductor.

Example 3 includes the device of any of Examples 1-2, wherein the end member of the electrical conductor is electrically coupled to, and receives alternating current (AC) voltage from, a stator of the power generator.

Example 4 includes the device of any of Examples 1-3, comprising a current transformer disposed inside the power generator, wherein the current transformer is electrically coupled to the end member and is configured to adjust the electrical power provided to the bus bar.

Example 5 includes the device of Example 4, wherein the current transformer is coated with an oil spray.

Example 6 includes the device of any of Examples 2-5, comprising a sealant layer disposed between the terminal block and the housing of the power generator.

Example 7 includes the device of any of Examples 1-6, comprising one or more sealing rings disposed adjacent to the electrical conductor.

Example 8 includes a device, comprising: a stud; an electrical conductor comprising a cavity and an end member, wherein the stud is disposed in the cavity of the electrical conductor; wherein the end member is configured to be disposed inside, and to receive electrical power from, a power generator, wherein the electrical conductor is configured to provide the electrical power to a bus bar coupled to the electrical conductor.

Example 9 includes the device of Example 8, comprising a terminal block coupled to an exterior of the power generator, wherein the terminal block permanently couples the electrical conductor to the power generator and electrically insulates a housing of the power generator from the electrical conductor.

Example 10 includes the device of any of Examples 8-9, wherein the end member of the electrical conductor is electrically coupled to, and receives alternating current (AC) voltage from, a stator of the power generator.

Example 11 includes the device of any of Examples 8-10, comprising a current transformer disposed inside the power generator, wherein the current transformer is electrically coupled to the end member and is configured to adjust the electrical power provided to the bus bar.

Example 12 includes the device of Example 11, wherein the current transformer is coated with an oil spray.

Example 13 includes the device of any of Examples 8-12, wherein a surface of the cavity is coated with a braze.

Example 14 includes the device of any of Examples 9-13, comprising a sealant layer disposed between the terminal block and the housing of the power generator.

Example 15 includes the device of any of Examples 8-14, comprising one or more sealing rings disposed adjacent to the electrical conductor.

Example 16 includes a system, comprising: a power generator; and at least one terminal coupled to the power generator, wherein each at least one terminal comprises: a stud; an electrical conductor comprising a cavity and an end member, wherein the stud is disposed in the cavity of the electrical conductor; wherein the end member is configured to be disposed inside, and to receive electrical power from, the power generator, wherein the electrical conductor is configured to provide the electrical power to a bus bar coupled to the electrical conductor.

Example 17 includes the system of Example 16, wherein the at least one terminal is a plurality of terminals, each of the plurality of terminals disposed inside the power generator at distinct locations.

Example 18 includes the system of Example 17, comprising a terminal block coupled to an exterior of the power generator, wherein the terminal block permanently couples the electrical conductor to the power generator and electrically insulates a housing of the power generator from the electrical conductor.

Example 19 includes the system of Example 18, wherein the terminal block comprises one or more partitions between one terminal and another terminal of the plurality of terminals, wherein the one or more partitions isolate the electrical conductor of the one terminal with respect to the electrical conductor of the another terminal.

Example 20 includes the system of any of Examples 18-19, comprising a terminal housing coupled to the terminal block, wherein the terminal housing encloses each of the at least one terminal.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A device, comprising:
a stud;
an electrical conductor comprising a cavity and an end member, wherein the stud is disposed in the cavity of the electrical conductor;
wherein the end member is configured to be disposed inside, and to receive electrical power from, a power generator,
wherein the electrical conductor is configured to provide the electrical power to a bus bar coupled to the electrical conductor.

2. The device of claim 1, comprising a terminal block coupled to an exterior of the power generator, wherein the terminal block permanently couples the electrical conductor to the power generator and electrically insulates a housing of the power generator from the electrical conductor.

3. The device of claim 1, wherein the end member of the electrical conductor is electrically coupled to, and receives alternating current (AC) voltage from, a stator of the power generator.

4. The device of claim 1, comprising a current transformer disposed inside the power generator, wherein the current transformer is electrically coupled to the end member and is configured to adjust the electrical power provided to the bus bar.

5. The device of claim 4, wherein the current transformer is coated with an oil spray.

6. The device of claim 1, wherein a surface of the cavity is coated with a braze.

7. The device of claim 2, comprising a sealant layer disposed between the terminal block and the housing of the power generator.

8. The device of claim 1, comprising one or more sealing rings disposed adjacent to the electrical conductor.

9. The device of claim 2, wherein the terminal block comprises a protrusion, wherein the protrusion is configured to be disposed inside the power generator.

10. The device of claim 9, wherein the protrusion defines a cavity in which the end member of the electrical conductor is disposed therein.
